# EUROPEAN PATENT APPLICATION

(11) **EP 4 387 176 A1**
(43) Date of publication of application: **19.06.2024**
(21) Application number: 22212837.3
(22) Date of filing: 12.12.2022
(51) Int. Cl.: H04L 12/40

(54) **CAN DEVICE AND METHOD FOR THE CAN DEVICE**

(71) Applicant: NXP B.V., 5656 AG Eindhoven (NL)
(72) Inventor: Elend, Bernd Uwe Gerhard, 5656 AG Eindhoven (NL); Muth, Matthias Berthold, 5656 AG Eindhoven (NL)
(74) Representative: Schmütz, Christian Klaus Johannes

(57) **Abstract**

The present disclosure relates to a controller area network, CAN, device, comprising: an input interface, a processing unit, and a CAN controller, wherein the CAN controller comprising a transmit data, TXD, interface and a receive data, RXD, interface; wherein the CAN device is configured to a) receive an input message via the input interface, b) generate a TXD frame based on the input message such that the TXD frame represents the input message, c) determine a bus idle state of a CAN Bus by detecting a predetermined number of at least eleven consecutive recessive bits, referred to as termination bits, received via the RXD interface, d) determine a release state by detecting that no dominant bit is received via the RXD interface within a predefined or predetermined waiting time directly after the bus idle state, and e) start sending the TXD frame via the TXD interface at or after the release state. The present disclosure also relates to a method for the CAN device.

## Description

### TECHNICAL FIELD

The present disclosure relates to a Controller Area Network, CAN, device and a method for the CAN device.

### BACKGROUND

CAN buses can be used for communications within vehicles, in particular within automobiles. It will be appreciated that CAN buses also have application outside of the field of automobiles. A CAN bus system may include multiple devices, so called as nodes or electronic control units (ECUs), such as an engine control module (ECM), a power train control module (PCM), airbags, antilock brakes, cruise control, electric power steering, audio systems, windows, doors, mirror adjustment, battery and recharging systems for hybrid/electric cars, and many more. Several nodes may be connected to a CAN network, such that the nodes can communicate among each other over the CAN network. A CAN protocol is used to enable communications between the various nodes. The data link layer of the CAN protocol is standardized as International Standards Organization (ISO) 11898-1:2003. CAN Flexible Data-Rate or "CAN FD," which is an extension of the standardized CAN data link layer protocol and is integrated into the ISO11898-1:2015 standard, CAN FD may provide higher data rates. The standardized CAN data link layer protocol is being further extended to provide even higher data rates. A further extension, referred to as CAN XL, with a new (optional) level scheme on the physical layer allowing even higher data rates is in the definition phase discussed under CiA610 (CAN in Automation) and is moving towards standardization in the form of ISO11898-1:202x.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Aspects of the disclosure are defined in the accompanying claims.

In accordance with a first aspect of the present disclosure, a controller area network, CAN, device, is provided. The CAN device comprising: an input interface, a processing unit, and a CAN controller, wherein the CAN controller comprising a transmit data, TXD, interface and a receive data, RXD, interface; wherein the CAN device is configured to perform the following steps
a) receive an input message via the input interface,
b) generate a TXD frame based on the input message such that the TXD frame represents the input message,
c) determine a bus idle state of a CAN Bus by detecting a predetermined number of at least eleven consecutive recessive bits, referred to as termination bits, received via the RXD interface,
d) determine a release state by detecting that no dominant bit is received via the RXD interface within a predefined or predetermined waiting time directly after the bus idle state; and
e) start sending the TXD frame via the TXD interface at or after the release state.

In one or more embodiments, the CAN device is configured to set a ready state as soon as the CAN device is ready to start transmitting the TXD frame via the TXD interface, wherein the CAN device is configured to start sending the TXD frame at the release state, if the ready state is at or before the release state.

In one or more embodiments, the CAN device is configured to prevent sending the TXD frame between the ready state and the release state.

In one or more embodiments, the CAN device is configured to start sending the TXD frame at the ready state, if both the release state is before the ready state and the CAN device detected that no dominant bit is received via the RXD interface within an intermediate time between the release state and the ready state.

In one or more embodiments, the waiting time is at least the duration of a fifth of a bit and/or at most the duration of 1000 bits.

In one or more embodiments, the processing unit is configured to determine the waiting time based on the input message.

In one or more embodiments, the input message comprises a field referred to as a priority field representing a priority of the input message, wherein the processing unit is configured to determine the waiting time based on the priority field of the input message.

In one or more embodiments, the input message is an Ethernet input message.

In one or more embodiments, the CAN device is configured to receive a RXD frame via the RXD interface and a plurality of interframe bits immediately after the RXD frame via the RXD interface, wherein the last bit(s) of the RXD frame and the interframe bits form the termination bits.

In one or more embodiments, the CAN device is configured to check whether a dominant signal is received via the RXD interface during the waiting time, and wherein the processing unit is configured to prevent sending of the TXD frame if a dominant signal is received via the RXD interface during the waiting time.

In one or more embodiments, the CAN device is configured to perform the following steps after step c):
c.1) checking whether a dominant signal is received via the RXD interface during the waiting time and/or the intermediate time, and
c.2) skip steps d) and e) if a dominant signal is received via the RXD interface during the waiting time and/or the intermediate time.

In one or more embodiments, the CAN device is configured to decrease the waiting time as a further step f) and to repeat the group of steps c) to e), preferably also including step f).

In one or more embodiments, the CAN device is configured to repeat the group of steps c) to f), wherein the CAN device is configured to decrease the waiting time in step f) depending on the respective number of repetition of the group of steps and/or on a time since the TXD frame was first started to be sent.

In accordance with a second aspect of the present disclosure, method for a Controller Area Network, CAN, device is provided, wherein the CAN device comprising an input interface, a processing unit, and a CAN controller, the CAN controller comprising a transmit data, TXD, interface and a receive data, RXD, interface, and wherein the method comprising the steps:
a) receiving an input message via the input interface,
b) generating a TXD frame at the CAN device based on the input message such that the TXD frame represents the input message,
c) determine a bus idle state of a CAN Bus by detecting a predetermined number of at least eleven consecutive recessive bits, referred to as termination bits, received via the RXD interface,
d) determine a release state by detecting that no dominant bit is received via the RXD interface within a predefined or predetermined waiting time directly after the idle state; and
e) start sending the TXD frame via the TXD interface at or after the release state.

In one or more embodiments, the method further comprising the following steps:
c.1) checking whether a dominant signal is received via the RXD interface during the waiting time and/or the intermediate time, and
c.2) skip steps d) and e) if a dominant signal is received via the RXD interface during the waiting time and/or the intermediate time.

In accordance with a third aspect of the present disclosure, a computer program is provided, comprising executable instructions which, when executed by a processing unit, cause the processing unit being configured to carry out the method of the second aspect and/or one or more embodiments thereof.

### DESCRIPTION OF DRAWINGS

Embodiments of the present disclosure will be described in more detail with reference to the appended drawings. It is to be noted, however, that the appended drawings illustrate only typical embodiments of this invention and are therefore not to be considered limiting of its scope, for the invention may admit to other equally effective embodiments. Advantages of the subject matter claimed will become apparent to those skilled in the art upon reading this description in conjunction with the accompanying drawings, in which like reference numerals have been used to designate like elements, and in which:
Figure 1 shows a simplified block diagram of a CAN system.
Figure 2 shows a simplified block diagram of a CAN node.
Figure 3 shows a simplified diagram of a CAN frame.
Figure 4 shows a simplified diagram of an Ethernet frame.
Figure 5 shows a simplified overview of CAN frames and a simplified CAN device.
Figures 6 to 9 show a simplified arrangements of CAN frames, messages, and waiting times.
Figures 10 and 11 shows a simplified flow charts.

### DESCRIPTION OF EMBODIMENTS

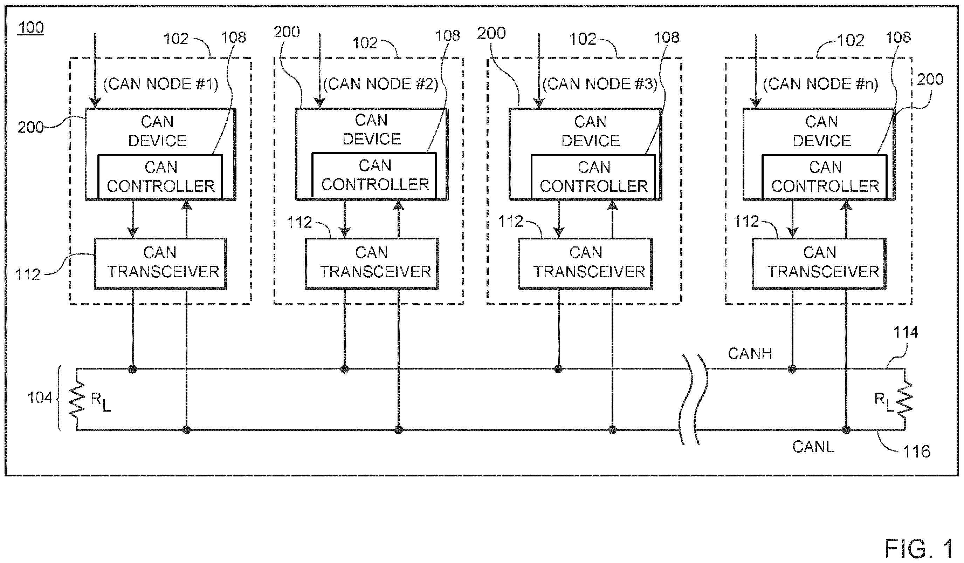

Figure 1 schematically depicts an example of a CAN system 100 that is known in the field. The CAN system may include multiple devices 102, also referred to as nodes 102, CAN nodes 102 or "ECUs" 102, each connected to a CAN BUS network 104. In Figure 1, each node 102 includes a CAN device 200 and a CAN transceiver 112. The CAN device 200 may be embedded in a microcontroller (not shown) of the node 102. The CAN device 200 comprises a CAN controller 108. The CAN device may also be referred to a CAN protocol controller, as the CAN device may comprise a configuration which is compliant with the CAN standard. The CAN controller 108 is often just a part of the CAN device 200 (CAN protocol controller 200). The CAN transceiver 112 may be referred to as a transceiver 112.

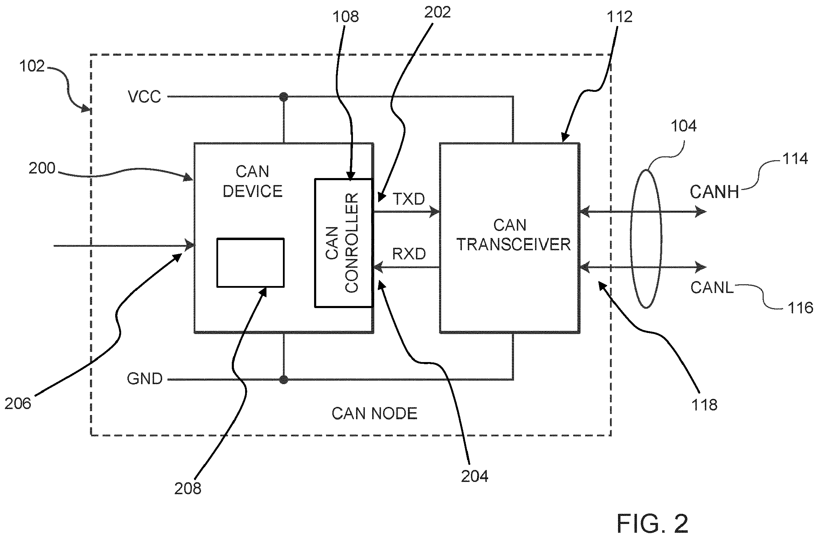

Each CAN device 200 is typically connected directly or indirectly to at least one device outside the system 100, such as a switch, a main controller, an actuator, or some other control device. The CAN devices 200 are often programmed to determine the meaning of messages received via the input interface 206 and to generate appropriate outgoing messages. Each CAN device 200 comprises a processing unit 208 (see Fig. 2). The processing unit 208 of a CAN device 200 may also be referred to as host processors, hosts or digital signal processors (DSPs). In an embodiment, the processing unit 208 of a CAN device 200 supports application software that interacts with the interfaces 206, 202, 204 of the CAN device 200.

The CAN BUS network 104 carries analog differential signals and includes a first CAN signal line 114, which is also referred to as the CAN high (CANH) bus line 114, and a second CAN signal line 116, which is also referred to as the CAN low (CANL) bus line 116. The CAN BUS network 104 is known in the field.

Figure 2 depicts an expanded view of one node 102 from Figure 1. In the expanded view of Figure 2, the CAN device 200 comprises the processing unit 208, which may, for example, run a software application that is stored in a memory of the CAN device 200. The CAN device 200 and the CAN transceiver 112 of the node 102 are connected to a supply voltage, between VCC and ground, GND. As illustrated in Figure 2, data communicated from CAN device 200 to the CAN transceiver 112 is identified as transmit data (TXD) and data communicated from the CAN transceiver 112 to the CAN device 200 is referred to as receive data (RXD). Throughout the description, TXD is carried on a TXD path and RXD is carried on an RXD path. The CAN transceiver 112 comprises a BUS interface to communicate messages to and from the CAN BUS network104 via the CANH and CANL bus lines 114 and 116, respectively.

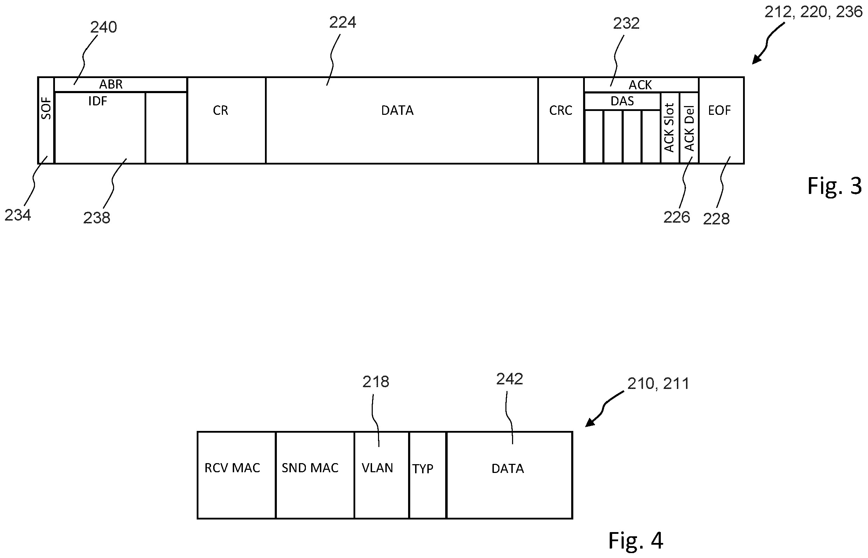

The data link layer operations between the CAN device 200 and the CAN transceiver 112 is known in the field. For example, in receive operations, the CAN device 200 receives from the transceiver 112 a digital RXD signal via the RXD path. The RXD signal may represent an CAN message. The CAN device 200 may store the received CAN message. The CAN message received via the RXD signal complies with the frame format of the CAN protocol, in particular with the CAN FD frame format and/or the CAN XL frame format. The CAN message received via the RXD signal may also be referred to as a RXD frame 220. An example of the RXD frame 220 is schematically illustrated in Figure 3. In transmit operations, the CAN device 200 transmits a TXD signal, which also represents a CAN message, via the TXD path to the CAN transceiver 112. The CAN message complies with the frame format of the CAN protocol, in particular with the CAN FD frame format and/or the CAN XL frame format. The CAN message transmitted via the TXD signal may also be referred to as a TXD frame 212. An example of the TXD frame 212 is schematically illustrated in Figure 3.

The CAN transceiver 112 is located between the CAN device 200 and the CAN BUS network 104. The CAN transceiver 112 is configured to implement physical layer operations according to the CAN specification as known in the field.

For example, in receive operations, a CAN transceiver 112 converts analog differential voltage signals from the CAN BUS network 104 to the RXD signal that the CAN device 200, in particular its CAN controller 108, can interpret. The CAN transceiver 112 may also protect the CAN device 200 from extreme electrical conditions on the CAN BUS network 104, e.g., electrical surges. As noted above, the CAN device 200, and in particular its CAN controller 108 may be configured to support CAN FD and/or CAN XL.

In transmit operations, the CAN transceiver 112 can convert the TXD signal received via the TXD path from the CAN device 200 into analog differential signals that are sent over a CAN BUS interface 118 on the CAN BUS network 104. The CAN BUS interface 118 is adapted to be connected to the first and second CAN BUS signal lines 114, 116.

Figure 1 schematically shows an embodiment of a CAN system 100, where several CAN nodes 102 are connected to the CAN bus network 104. Each CAN node 102 may in principle access the CAN bus network 104 as soon as the CAN bus network 104 is idle. Once the CAN bus network 104 becomes idle, multiple CAN nodes 102 may attempt to access the CAN bus network 104 simultaneously, with each accessing CAN node 102 attempting to send an associated CAN message over the CAN bus network 104. Each CAN message represents a CAN frame 236 structured according to the CAN standard.

Figure 3 shows a schematic example of a CAN frame 236. Each CAN frame 236 comprises an identifier field 238, also referred to as identifier 238. The identifier 238 comprises several bits, for example eleven bits. When multiple CAN messages are accessing the CAN bus network 104 simultaneously, bitwise arbitration is performed via the arbitration fields 240, wherein each arbitration field 240 comprises at least one identifier 238 of the respective CAN frame 236 and may additionally comprise an RTR bit. The RTR bit can be used to distinguish between a data frame and a remote frame. It is to be noted that the RTR bit in CAN XL is referred to as the RRS bit, where the RRS position within the frame can be different from the RTR position. The arbitration achieves that after an arbitration phase only exactly one of the CAN nodes 102 can access the CAN bus network 104 whose CAN message represents a CAN frame 236 with an arbitration field 240, in particular with an identifier 238, which has won the arbitration.

The structure of the CAN frame 236 schematically illustrated in Figure 3 may apply in an analogous manner to the TXD frame 212 and to an RXD frame 220. The following explanations of the CAN frame 236 may therefore refer to any CAN frame of the present disclosure, wherein the CAN frame 236 preferably comprises the following fields:
- SOF: Start of Frame (SOF)
- Arbitration: Arbitration (ABR) Field, which includes the Identifier (IDF) Field.
- CR: Control (CR) Filed
- Data: Payload Data Field
- CRC: Cyclic Redundancy Check (CRC)
- ACK: Acknowledge (ACK)
- EOF: End of Frame (EOF)

The meaning of the previously mentioned fields can be derived from the CAN standard.

Figure 3 schematically illustrates the EOF field 228 of the CAN frame 236. Preferably, the EOF field 228 consists of exactly seven recessive bits. The recessive bits of the EOF field 228 preferably form the end of the CAN frame 236. The EOF field 228 may follow an acknowledgement field (ACK) 232 in the CAN frame 236. It should be mentioned that the DAS field is only present in a CAN XL frame. The DAS field is not present in a classic CAN or CAN FD frame. The ACK field 232 comprises a subfield 226, also referred to as acknowledgement delimiter field 226. The acknowledgement delimiter field 226 is preferably forms the end of the ACK field 232. Preferably, the acknowledgement delimiter field 226 is formed by exactly one recessive bit. In an example, the acknowledgement delimiter field 226 and the EOF field 228 form eight consecutive recessive bits.

The CAN frame 236 may start with a start-of-frame (SOF) bit 234, wherein the SOF bit 234 is preferably a dominant bit. The SOF bit 234 is preferably followed by the arbitration field 240. In addition, the CAN frame 236 preferably comprises a data field 224. The data field may be arranged in the CAN frame 236 between the arbitration field 240 and the ACK field 232. The CAN frame 236 may comprise further fields arranged between arbitration field 240 and the ACK field 232.

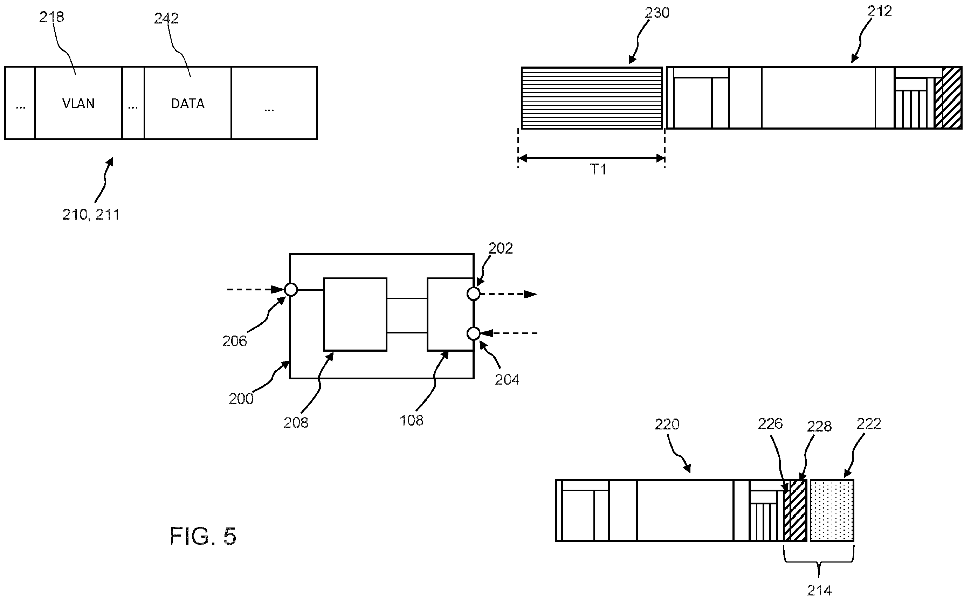

An example of an embodiment of a CAN device 200 according to the present disclosure is schematically illustrated in the center of Figure 5. The CAN device 200 may also be referred to as a CAN protocol controller 200. The CAN device comprises an interface 206, a processing unit 208, and a CAN controller 108. The interface 206 is also referred to as the input interface 206. The input interface may be configured as a logical interface or a physical interface. The CAN device 200 also comprises a TXD interface 202 and a RXD interface 204. The TXD interface 202 and the RXD interface 204 are preferably part of the CAN controller 108. The processing unit 208 of the CAN device 200 may comprise a circuit arrangement and/or a processor for processing data. The CAN device 200 is configured to receive an input message 210 via the input interface 206. An example of an input message 210 is schematically illustrated in Figure 4. In an example, the input message 210 may represent a group of multiple fields 218, 242 each comprising one or more digital bits. In an example, the input message 210 may represent a data packet 211 formed by the group of fields 218, 242.

Figure 4 schematically illustrates an example of a data packet 211. The data packet 211 comprises a packet priority field 218, a packet payload field 242 and preferably further fields. In an example, the data packet 211 is formed and/or structured as an Ethernet packet 211. The Ethernet packet 211 is preferably a data packet according to standard IEEE 802.3 and/or according to standard IEEE 802.1Q. The Ethernet packet 211 may comprise the following fields:

| | |
|---|---|
| Receiver MAC address | The receiver MAC address (RCV MAC) preferably represents and/or identifies the target device, in particular a target network station, which is to receive the data packet. The receiver MAC address preferably has 48 bits. |
| Transmitter MAC address | The transmitter MAC address (SND MAC) preferably represents and/or identifies the transmitter device, in particular a transmitter network station, that sends the data packet. The transmitter MAC address preferably has 48 bits. |
| VLAN tag | A Virtual Local Area Network (VLAN) is a logical subnet in a physical network. The VLAN tag has a total length of 32 bits. The VLAN tag preferably consists of the following four associated fields: Tag Protocol Identifier (TPI), Priority Code Point (PCP), Drop Eligible Indicator (DEI), and VLAN Identifier (VID). The PCP field represents a priority of the data packet. The priority of the data packet 211 represented by the PCP field may help and/or ensure to achieve low latency or high data security of heavily loaded networks. The other fields are known from the standard. The VLAN tag is optional, such that the VLAN tag is not completely independent, but is dependent on a Type field. If the type field indicates that a VLAN tag is present, the VLAN tag is inserted. Otherwise, no VLAN tag is present. The length of the user data field can be shorter or longer depending on the presence of the VLAN tag. |
| Type field | The type field (TYP) provides information about the used protocol of the next higher layer. |
| User data | The user data field (DATA) preferably comprises a maximum of 1500 bytes. The user data are interpreted by the protocol specified under Type. |

Provided that the data packet 211 is formed by an Ethernet packet 211, as schematically shown for example in Figure 4, the packet priority field 218 is preferably formed by the PCP field of the VLAN tag of the Ethernet packet 211 and the packet payload field 242 is formed by the payload data of the Ethernet packet 211.

To the extent that the data packet 211 is formed by a data packet that is not formed in accordance with the Ethernet standard, the data packet 211 may still include a packet priority field 218 representing the priority of the data packet 211 and a packet payload data field 242 comprising the payload data of the data packet 211.

The CAN device 200 is configured to generate a TXD frame 212 based on the input message 210, which preferably represents the data packet 211. Preferably, the TXD frame 212 is generated by the CAN device 200 such that the TXD frame 212 is formed according to the CAN FD standard or the CAN XL standard. Furthermore, the TXD frame 212 is generated by the CAN device 200 such that the TXD frame 212 represents the input message. The representation may be sufficiently fulfilled, if the TXD frame 212 represents at least the payload data field 242 of the data packet 211 or at least a fraction of the payload data field 242 of the data packet 211. The latter alternative may relate to the case, if the input message is fragmented into a plurality of sub-input messages. In this case, each sub-input message may be considered as a input message of the present disclosure. In an example, the processing unit 208 of the CAN device 200 controls the CAN controller 108 to generate the TXD frame 212 based on the input message. The CAN controller 108 may be controlled by the processing unit 208, such that the whole data packet 211 or a part of the data packet 211 is embedded in the data field 224 of the TXD frame 212. For this purpose and/or as an example, the bit length of the data field 224 of the TXD frame 212 can be longer than the total bit length of the data packet 211.

For example, if a data packet 211 is received via the input message 210 at the input interface 206 of the CAN device 200, it is possible that the entire data packet 211 is embedded in the data field 224 of the TXD frame 212, so that the entire data packet 211 can be sent to a further node 102 via the CAN BUS network 104 by means of the TXD frame 212. In this further node 102, the entire data packet 211 may be extracted from the TXD frame 212 in order to forward or process the data packet 211 at the further node 102. The further node 102 may comprise an ethernet interface, such that the data packet 211 is transmitted as an ethernet packet via the ethernet interface.

However, it may also possible that only selected fields 218, 242 or parts of selected fields 218, 242 of the data packet 211 are represented and/or transmitted by means of the TXD frame 212. It is preferred that the payload data field 224 of the TXD frame 212 comprises and/or represents at least the packet payload data field 242 of the data packet 211. The bits of the packet payload data field 242 may be included as a copy in the data field 224 of the TXD frame 212. In addition, the data field 224 of the TXD frame 212 may comprise and/or represent other fields or parts of other fields of the data packet 211.

The CAN device 200 comprises the RXD interface 204. The RXD interface may be formed by the CAN controller 108 of the CAN device 200. The CAN device 200 may be configured to receive a signal referred to as an RXD signal via the RXD interface 204. The RXD interface 204 is preferably a physical interface. The RXD signal is preferably a digital signal. The RXD signal may represent an RXD frame 220. An example of the RXD frame 220 is schematically illustrated in the lower right quarter of Figure 5. The preceding discussion of the CAN frame 236 of Figure 3 is referred to in an analogous manner for the RXD frame 220. The RXD frame 220 may comprise an acknowledgement delimiter field 226 and an EOF field 228.

In an example, the RXD signal that the CAN device 200 can receive via the RXD interface 204 may represent a bitstream referred to as an RXD bitstream. The RXD bitstream may be any length of consecutive bits. A plurality of these consecutive bits may collectively form the bits of the RXD frame 220, where the bits of the RXD frame 220 may be logically divided into associated fields 240, 224, 232, 228, etc. and associated bits 234, 226, etc. Multiple RXD frames 220 may be represented by the RXD bit stream in a time shifted manner. However, two RXD frames 220 cannot follow each other directly. Preferably, at least three bits 222 of the RXD bitstream are arranged between a RXD frames 220 and a subsequent RXD frame 220. These three bits 222 of the RXD bitstream are referred to as interframe bits 222. As can be derived from the lower quarter of Figure 5, interframe bits 222 may always follow an RXD frame 220. Each interframe bit 222 is preferably formed by a recessive bit. The acknowledgement delimiter bit 226 of the RXD frame 220, the bits of the EOF field 228 of the RXD frame 220, and the interframe bits 222 directly following the RXD frame 220 are preferably a total of eleven consecutive bits, each of which is a recessive bit. These eleven consecutive recessive bits 226, 228, 222 are also referred to as termination bits 214.

A CAN node may be configured to detect an error that is caused by local disturbance. If the CAN node detects an error, the CAN node will transmit an error flag to inform all other CAN nodes connected to the same CAN BUS network as the error-detecting CAN node. The error flag consists of six dominant bits. The error flag results in an intentional violation of the bit stuffing rule of the CAN standard. The error flag is followed by an error delimiter. The error delimiter consists of eight recessive bits. The error delimiter is also followed by interframe bits 222. As a result, the error delimiter may be considered to replaces the ACK delimiter and the EOF of a regular frame transmission. But both cases have eleven consecutive recessive bits before a new frame transmission can start.

Recessive bits and dominant bits are known. Their understanding can be found in the CAN standard.

The CAN device 200 is configured to detect the reception of a predetermined number of at least eleven consecutive recessive bits, referred to as termination bits, via the RXD interface 204. The predefined number is preferably eleven.

Previously, it was explained that the CAN device 200 may receive an RXD signal via the RXD interface 204. The RXD signal may represent an RXD frame 220 and the interframe bits 222 directly following the RXD frame 220. The RXD frame 220 may represent a message being transmitted over the CAN bus network 104. The CAN bus network 104 does not include the CAN nodes 102. If no further message is transmitted via the CAN bus network 104 following the interframe bits 222, the CAN bus network 104 is in a state also referred to as the bus idle state. The CAN bus network 104 is not used during the bus idle state to transmit messages.

Through the CAN controller 108 and associated RXD interface 204, the CAN device 200, in particular its processing unit 208, may be configured to monitor the RXD signal received via the RXD interface 204. By monitoring the RXD signal, the CAN device 200 may detect each recessive bit represented by the RXD signal and each dominant bit represented by the RXD signal. Further, the CAN device 200, and in particular its processing unit 208, may be configured to detect a predetermined number of at least eleven consecutive bits, which are referred to as the termination bits, if the termination bits are represented by the RXD signal. From the detection of the termination bits, it may be derived that the CAN network 104 is now in the bus idle state and that the CAN network 104 is now ready to be used to transmit another message between two CAN nodes 102.

The CAN device 200 is configured to detect the bus idle state of the CAN bus network 104, and preferably if and/or once the CAN device 200 has received the predetermined number of at least eleven consecutive recessive bits (i.e., the termination bits) via the RXD interface 204. The termination bits may be represented by the RXD signal that the CAN device 200 may receive via the RXD interface 204. In an example, the CAN device 200 determines the bus idle state of the CAN bus network 104 once the termination bits are detected.

Determining a state preferably does not mean to calculate the state, but determining the state may rather be understood to determine that the state has been reached and/or entered or determining the state may be understood to set the state. The understanding of determining a state may be applied to determining the various states of the present disclosure. In an example, the understanding of determining a state may be applied to determining the bus idle state.

If the CAN bus network 104 is in the bus idle state, the CAN device 200 could in principle start sending a TXD frame 212 via the TXD interface 202. If several CAN devices 200 start sending TXD frames 212 simultaneously when the CAN bus network 104 enters the bus idle state, the arbitration mentioned above is performed based on the arbitration fields 240 including the identifiers 238 of the TXD frames 212. The TXD frame 212 whose arbitration field 240 / identifier 238 represents the highest priority wins the arbitration, so that transmission of only that TXD frame 212 continues uninterrupted.

Previously, it was explained that the CAN device 200 is configured to generate a TXD frame 212 based on an input message 210, wherein the input message 210 represents a data packet 211 that includes at least a priority field 218 and a data field 242. The priority field 218 may represent the priority of the input message 210 and/or the data packet 211. In the previously explained known arbitration, the priority of the input message 210 is disregarded. It is desirable to provide a way so that when TXD frames 212 are sent using CAN device 200, the priority of input message 210 may be taken into account.

The priority of an input message 210 could be taken into account when sending a TXD frame 212 resulting from the input message 210 by an additional waiting time 230, which follows the bus idle state of the CAN bus network 104. Following this idea, two examples are explained below.

In an example, the CAN device 200 may often or exclusively receive input messages 210 via the input interface 206, each of which represents a data packet 211 having a priority field 218 representing a low priority of the respective associated input message 210. In such a case, it is desirable for the CAN device 200 to take into account the expected low priority of the input messages 210 when sending TXD frames 212. In an example, a waiting time 230 may be predefined for such cases. The waiting time 230 may have been determined based on an average value of previously received low priority input messages 210, and thereupon taken into account as a predefined waiting time 230 for a future sending of TXD frames 212.

In another example, the CAN device 200 may sequentially receive a plurality of input messages 210 via the input interface 206, each representing a data packet 211 having a priority field 218. The priority fields 218 may represent different levels of priority for the associated input messages 210. In such cases, the predefined waiting time 230 may not be as useful as a predetermined waiting time 230. In such cases, where the CAN device 200 receives multiple input messages 210 with different high priorities, it may be advantageous to determine the waiting time 230 individually as a function of the priority of respective input message 210 received. Thus, the waiting time 230 may be calculated by the processing unit 208 of the CAN device 200 for each TXD frame 212 individually based on the priority level of the respective input message 210. Preferably, the waiting time 230 may be determined as a short waiting time 230 if the priority of the input message 210 is high. The waiting time 230 may be determined to be a long waiting time 230 if the priority of the input message 210 is low. Determining the length of the waiting time 230 may be performed by the CAN device 200, in particular by its processing unit 208. Preferably, the waiting time 230 is determined before the TXD frame 212 is sent, so that the waiting time 230 may be designated as a predetermined waiting time 230 in the explained example.

Before a TXD frame 212 is sent, the bus idle state of the CAN bus network 104 must first be detected and/or determine and then the waiting time 230 must be waited for. A waiting time 230 can be assigned to each TXD frame 212. The waiting time 230 of the respective TXD frame 212 allows the priority of the input message 210, based on which the respective TXD frame 212 is generated, to be taken into account. As previously explained, the waiting time 230 may be determined directly from the priority of the input message 210. However, it is also possible that the waiting time 230 is predefined, wherein this waiting time 230 has been derived, for example, from a previous statistical determination. The statistical determination also maps the expected priority of the input messages 210 to the predefined waiting time 230.

As a result, the waiting time 230 for sending a TXD frame 212 allows and/or provides a direct or indirect consideration of the priority of the input message 210 based on which the TXD frame 212 is generated. An input message 210 with a high priority causes, via the corresponding short waiting time 230 for the TXD frame 212 resulting from the input message 210, that the TXD frame 212 can be sent with a high chance in a limited time after a detection of the bus idle state of the CAN bus network 104. Another input message 210 with a low priority causes, via the corresponding long waiting time 230 for the TXD frame 212 resulting from the input message 210, that the TXD frame 212 can be sent with a low chance in a limited time after the detection of the bus idle state of the CAN bus network 104. Therefore, the input message 210 with the high priority statistically has an advantage over the other input message 210 with the low priority.

In light of the examples previously discussed, it has been found advantageous that the CAN device 200 is configured to determine a state, which is referred to as release state, if and/or once no dominant bit is received over the RXD interface within a predefined or predetermined waiting time 230, which is directly following the bus idle state of the CAN bus network 104.

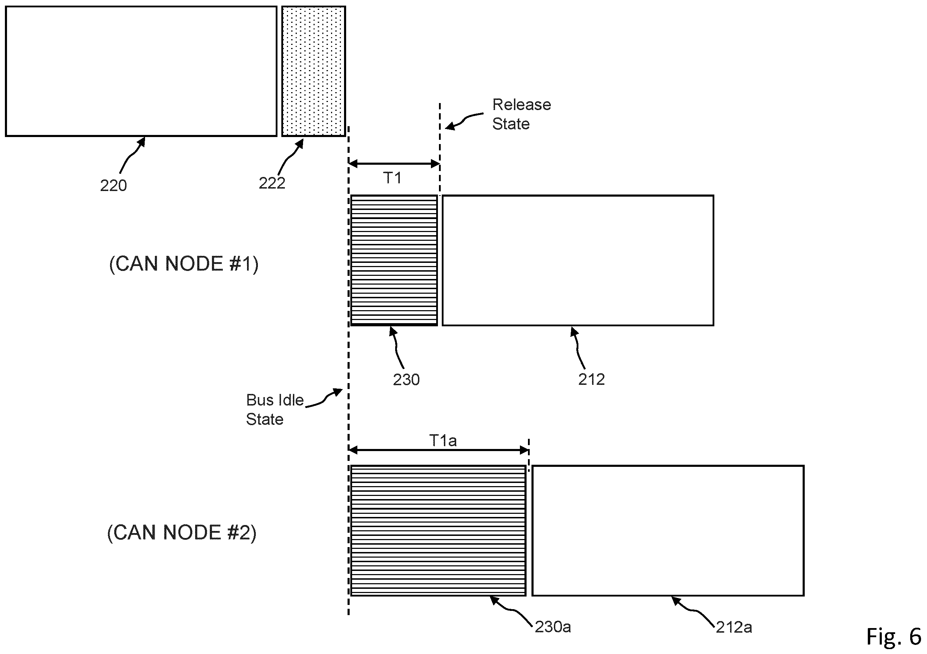

In Figure 6, an RXD frame 220 is shown schematically. The CAN device 200 may be configured to receive the RXD frame 220 via the RXD interface 204, where the RXD frame 220 may be represented by an RXD signal. The RXD frame 220 is followed by preferably the interframe bits 222. The interframe bits 222 may be received by the CAN device 200 via the RXD interface 204, wherein the interframe bits 222 may also be represented by the RXD signal. The interframe bits 222, the end of frame bits 228, and the acknowledge delimiter bit 226 form the termination bits 214, which the CAN device 200 may receive via the RXD interface 204, wherein the termination bits 214 may also be represented by the RXD signal. The termination bits 214 are preferably eleven consecutive recessive bits. By detecting the termination bits 214, the CAN device 200 can determine the bus idle state of the CAN bus network 104. This state is schematically indicated by a dashed line in Figure 6.

Against this background, the CAN device 200 is preferably configured to receive the RXD frame 220 via the RXD interface 204 and a plurality of interframe bits 222 directly after the RXD frame 220 via the RXD interface 204, wherein the last bit or bits 226, 228 of the RXD frame 220 and the interframe bits 222 form the termination bits 214. The last bits 226, 228 of the RXD frame 220 may be formed by the least significant bits of the RXD frame 220. The number of interframe bits 222 may be predefined. In an example, the interframe bits 222 are three consecutive recessive bits.

In principle, it is possible for the bus idle state of the CAN bus network 104 to be detected by two different nodes 102, each having a CAN device 200. The CAN devices 200 of the two nodes 102 may have received different input messages 210. In an example of Figure 6, the input message 210 designated as the first input message 210 for the first node 102 (#1) has a higher priority than the input message 210 designated as the second input message 210 for the second node 102 (#2). The CAN device 200 of the first node 102 may generate a TXD frame 212 and determine a waiting time 230 based on the received input message 210. The CAN device 200 of the second node 102 may determine a TXD frame 212a and a waiting time 230a based on the received different input message 210. Due to the different priorities of the two input messages 210, the waiting time 230a is longer than the waiting time 230. As a result, the priority of the first input message 210 may result in the effect that the shorter waiting time 230 (being shorter than the waiting time 230a) prioritize sending the TXD frame 212 over sending the other TXD frame 212a.

Previously, it was explained that the CAN device 200 may be configured to monitor the RXD signal received at the RXD interface 204 of the CAN controller 108. By monitoring the RXD signal, the CAN device 200 may detect each recessive bit represented by the RXD signal and each dominant bit represented by the RXD signal. Based on the monitoring of the RXD signal, the CAN device 200 may also determine whether the RXD signal represented either a dominant bit or no dominant bit during the waiting time 230. In an example, if no dominant bit was received by the CAN device 200 via the RXD signal during the waiting time 230, it may be assumed that the CAN bus network 104 is still idle (free) to be used for transmitting a message/frame. In this case, the release state can be determined. In Figure 6, the release state is schematically indicated by a dashed line. In the example of Figure 6, the CAN device 200 of the first node 102 (#1) may determine the release state at the end of the waiting time 230. Based on the determined release state, the transmission of the TXD frame 212 by the CAN device 200 of the first node 102 can be started directly following the waiting time 230. The SOF bit 234 of the TXD frame 212 is a dominant bit. This dominant bit will be received by the CAN device 200 of the second node 102 (#2) via the associated RXD interface 204 during the waiting time 230a. If the dominant bit has been received by the CAN device 200 of the second node 102 via the RXD signal during the waiting time 230a, it can be assumed by the CAN device 200 of the second node 102 that the CAN bus network 104 is no longer idle. In fact, the CAN bus network 104 is in use by the first node 102. In this case, the release state cannot be determined by the CAN device 200 of the second node 102, so that the CAN device 200 of the second node 102 cannot start sending the TXD frame 212a following the waiting time 230a. Rather, in this case, the CAN device 200 of the second node 102 will again begin monitoring the RXD signal to detect a new set of termination bits 214 and waiting time 230 and to determine the release state of the CAN bus network 104.

Against this background, in an example, the CAN device 200 may be configured to check whether a dominant signal is received over the RXD interface 204 during the waiting time 230a, and wherein the CAN device 200 is configured to prevent a transmission of the TXD frame 212a if a dominant signal is received over the RXD interface 204 during the waiting time 230a. The dominant signal may represent at least one dominant bit.

The preceding explanations illustrated the influence of a priority of an input message 210 over the waiting time 230 on the order and/or priority in which TXD frames 212 are sent over the CAN bus network 104. An input message 210 having a high priority results in a higher chance that a corresponding TXD frame 212 can be transmitted over the CAN bus network 104 in a timely manner.

The waiting time 230 can in principle be any length of time. It is possible that the waiting time 230 is a multiple of the time of a single bit. Alternatively, it is possible that the waiting time 230 is not a multiple of the time of a single bit. In an example, the waiting time 230 may be shorter than the time of a single bit. Preferably, the time of a single bit refers to a bit according to the CAN standard, preferably the time of the first bit of a frame according to the CAN standard. Preferably, the waiting time 230 is greater than zero.

In an example, the CAN device 200 is configured to determine a state, which is referred to as a ready state, if and/or once the CAN device 200 is ready to begin transmitting the TXD frame 212 over the TXD interface 202. The ready state is preferably a state of the CAN device 200. The ready state may represent a readiness of the CAN device 200 to send the TXD frame 212. In the ready state, the CAN device 200 is in principle ready to transmit the TXD frame 212 without necessarily directly starting to actually transmit the TXD frame 212 from the time the ready state is determined.

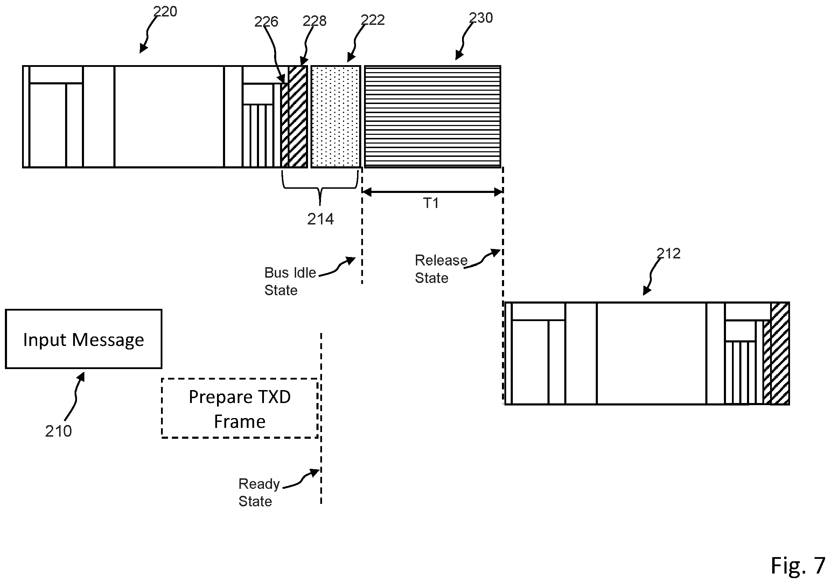

In Figure 7, an example of the RXD frame 220 is schematically shown. The RXD frame 220 includes the acknowledge delimiter bit 226 and the EOF bits 228. Figure 7 also schematically shows an example of the interframe bits 222 and an example of a waiting time 230. The interframe bits 222 join the acknowledge delimiter bit 226 and the EOF bits 228 to form the termination bits 214. The termination bits 214 may be received by the CAN device 200, allowing the CAN device 200 to determine the bus idle state of the CAN bus network 104. The termination bits 214 are directly followed by the waiting time 230. At the end of the waiting time 230, the CAN device 200 may determine the release state. In an example, the CAN device 200 is configured to begin sending the TXD frame 212 on or after the release state if the bus idle state is present and/or determined on or before the release state. As a result, the CAN device 200 may begin sending the TXD frame 212 at the time the release state is entered or after the release state is entered.

In the example of Figure 7, the CAN device 200 may receive the input message 210 partially in parallel in time with the RXD frame 220. The CAN device 200 is configured to generate the TXD frame 212 based on the input message 210. Once the CAN device 200 is ready to send the generated CAN frame 212, the CAN device 200 may determine the ready state. In the example of Figure 7, the CAN device 200 determines the ready state parallel in time with the reception of the interframe bits 222. Thus, the ready state is prior in time to the release state, which is present at the end of the waiting time 230. Because of this timing arrangement, the CAN device 200 can begin sending the TXD frame 212 directly upon determining the release state. This timing arrangement provides the advantage of ensuring that the CAN device 200 does not start sending the TXD frame 212 before the release state, even though the CAN device 200 would already be in principal ready to start sending the TXD frame 212 at the ready state. In fact, the CAN device 200 starts sending TXD frame 212 only from the time at which the release state is determined. The release state is determined at the end of the waiting time 230, so that the priority of the input message 210, on the basis of which the TXD frame 212 was generated, is at least indirectly taken into account when sending the TXD frame 212.

If other nodes 102 start sending a frame via the CAN bus network 104 parallel in time, the known arbitration takes place. In order for the TXD frame 212 to be completely sent over the CAN bus network 104, the identifier 238 of the TXD frame 212 must win the arbitration.

In the example shown in Figure 7, the ready state occurs before the CAN device 200 determines the bus idle state of the CAN bus network 104 and before the release state is determined by the CAN device 200. In this example, the ready state is temporally before the bus idle state and temporally before the release state.

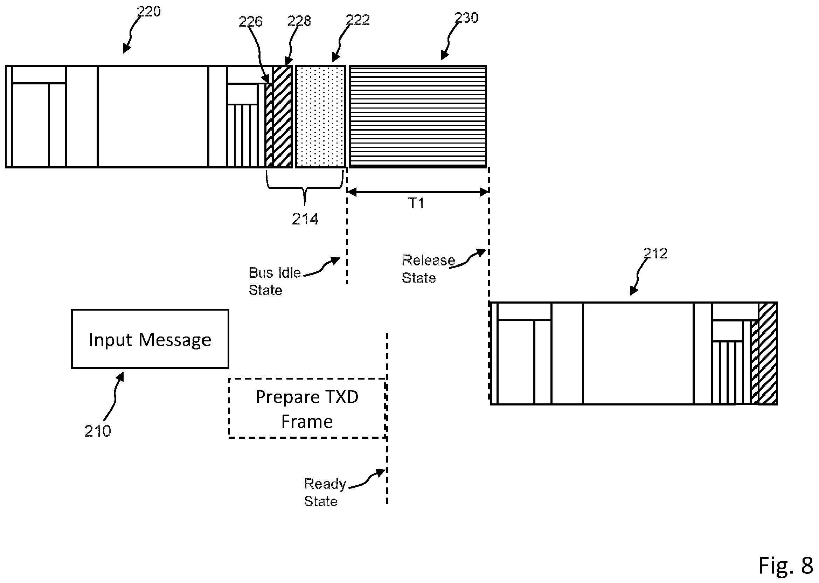

Figure 8 schematically shows another example which essentially corresponds to the example in Figure 7. The preceding explanations are therefore referred to in an analogous manner. The example in Figure 8 differs from the example in Figure 7 in that the ready state lies temporally between the bus idle state and the release state. Since the CAN device 200 in the example of Figure 8 determines the ready state before the release state, the CAN device 200 can start actually sending the TXD frame 212 directly after determining the release state.

In an example, the CAN device 200 is configured to prevent the TXD frame 212 from being sent between the ready state and the release state. If there is a period of time between the ready state and the release state (or vice versa), the CAN device 200 may be configured to prevent the TXD frame 212 from actually being sent during said period of time.

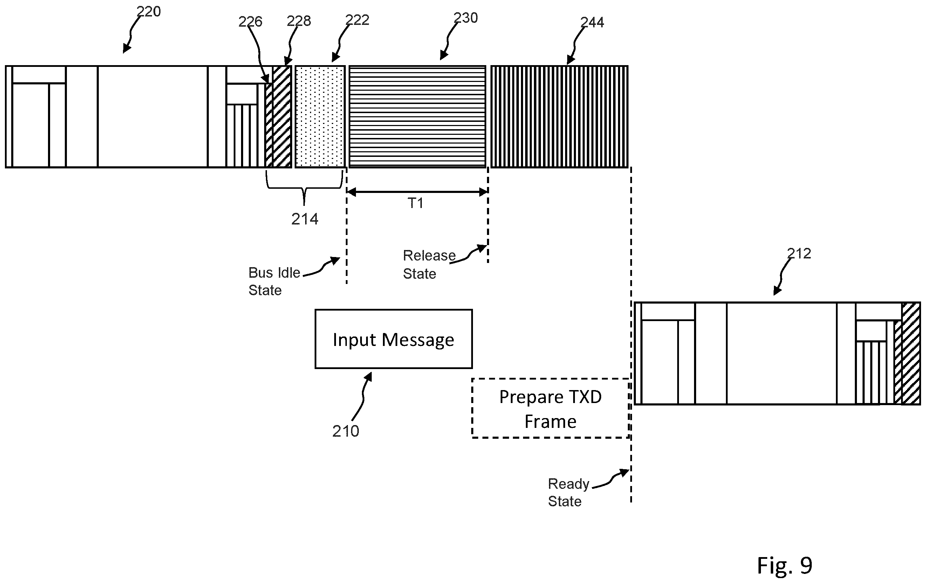

Figure 9 schematically shows another example based on the example in Figure 7. The previous explanations for Figure 7 are referred to in an analogous manner. The example in Figure 9 differs from the example in Figure 7 in that the ready state is in time after the release state. The release state at the end of the waiting time 230 is directly followed by an intermediate time 244 until the CAN device 200 determines the ready state. The intermediate time 244 may be caused by the "late" receipt of the input message 210. In an example, the input message 210 may be received during the time of the reception of the termination bits 214 and/or during the waiting time 230. The CAN device 200 may generate the TXD frame 212 at least in part during the intermediate time 244. The CAN device 200 may have completed generating the TXD frame 212 at the end of the intermediate time 244, such that the CAN device 200 determines the ready state at the end of the intermediate time 244. From time of the determination of the ready state, the CAN device 200 is actually ready to send the TXD frame 212. Even though the CAN device 200 was already theoretically allowed to send a TXD frame 212 from the release state, the CAN device 200 was not yet prepared (ready) to actually send the TXD frame 212 in the example of Figure 9. The CAN device 200 actually ready to begin sending the TXD frame 212 only at or after the time the ready state is determined. However, the sending of the TXD frame 212 should only be started from the ready state in the case where no dominant bit is received via the RXD interface 204 of the CAN device 200 during the intermediate time 244, because only if no other node 102 has started sending a frame during the intermediate time 244, the CAN device 200 can directly start sending the TXD frame 212 from the ready state.

In an example, the CAN device 200 is configured to begin sending the TXD frame 212 upon detecting the ready state if both the release state is prior to the ready state and the CAN device 200 has detected that no dominant bit has been received over the RXD interface 204 within the intermediate time 244 between the release state and the ready state. This basically ensures that no other node has started sending a frame over the CAN bus network 104 within the intermediate time 244, and that the CAN bus network 104 is still free to actually start sending the TXD frame 212. Verifying that no dominant bit is received by the CAN device 200 via the RXD interface 204 within the intermediate time 244 provides the advantage that the CAN device 200 does not have to wait again for the waiting time 230 after determining the ready state before the CAN device 200 can begin sending the TXD frame 212. The idea behind sending the TXD frame 212 upon reaching the ready state is that the waiting time 230 has already elapsed. This ensures a particularly efficient use of the CAN bus network 104.

In an example, the waiting time 230 is at least the duration of one-fifth of a bit. This ensures that the waiting time 230 is greater than zero. By allowing the waiting time 230 to be less than the duration of a single bit, it is further ensured that the CAN bus network 104 can be used in a particularly efficient manner. The duration of a single bit refers to the duration of a single bit according to the CAN standard. In an example, the duration of a single bit may refer to the duration of the first bit (SOF) of a frame according to the CAN standard.

In an example, the waiting time 230 is at most the duration of 1000 bits. The duration of a single bit has been explained previously. The upper limit on the duration of the waiting time 230 can effectively prevent a TXD frame 212 send from being delayed too much.

In an example, the CAN device 200 is configured to transmit a recessive signal over the TXD interface during the waiting time 230. Since the waiting time 230 is not necessarily a multiple of the duration of a single bit, the recessive signal may represent multiple recessive bits and/or a fraction of a recessive bit. Sending the recessive signal allows other nodes 102 to begin sending a frame during the waiting time 230. This may allow prioritization with respect to sending TXD frames 212 from different nodes 102.

It was explained earlier that the waiting time 230 may be either predefined or predetermined by the CAN device 200. The length of the waiting time 230 is not random. In an example, the CAN device 200 may be configured to store the waiting time 230. In this case, the waiting time 230 may be a constant waiting time 230 used by the CAN device 200. In another example, the CAN device 200 may be configured to determine the waiting time 230 based on the input message 210. In an example, if multiple input messages 210 are received sequentially by the CAN device 200, wherein the waiting time 230 may be different based on the particular input message 210. An input message 210 with a high priority may result in a short waiting time 230. Another input message 210 with a low priority may result in a long waiting time 230. Thus, prioritization when sending TXD frames 212 may be affected by the priorities of the input messages 210.

Figure 4 schematically illustrates an example of an input message 210. The input message 210 may be in the form of a data packet 211. The input message 210 may, for example, be an Ethernet message. With respect to the Ethernet message, reference is made to the associated preceding explanations in an analogous manner.

In an example, the input message 210 may include a field referred to as a priority field 218. The priority field 218 may be formed by, for example, a PCP field of the VLAN tag of an Ethernet message. The Ethernet message may be in the form of an Ethernet packet. The priority field 218 of the input message 210 may represent the priority of the input message 210. The priority of multiple input messages 210 may be different. Against this background, it is advantageous to consider the priority of an input message 210 when sending the resulting TXD frames 212. Preferably, the CAN device 200 is configured to determine the waiting time 230 for a TXD frame 212 such that the waiting time 230 is inversely proportional to a level of a priority of an input message 210 based on which the TXD frame 212 is generated.

In an example, the input interface 206 may be an interface within the CAN device 200. The CAN device 200 may be integrated into a system device, such that the input interface 206 in this example is located at the transition from the CAN device 200 to the system device.

In an example, the input interface 206 of the CAN device 200 may be configured as a software interface. In another example, the input interface 206 of the CAN device 200 may be configured as a hardware interface.

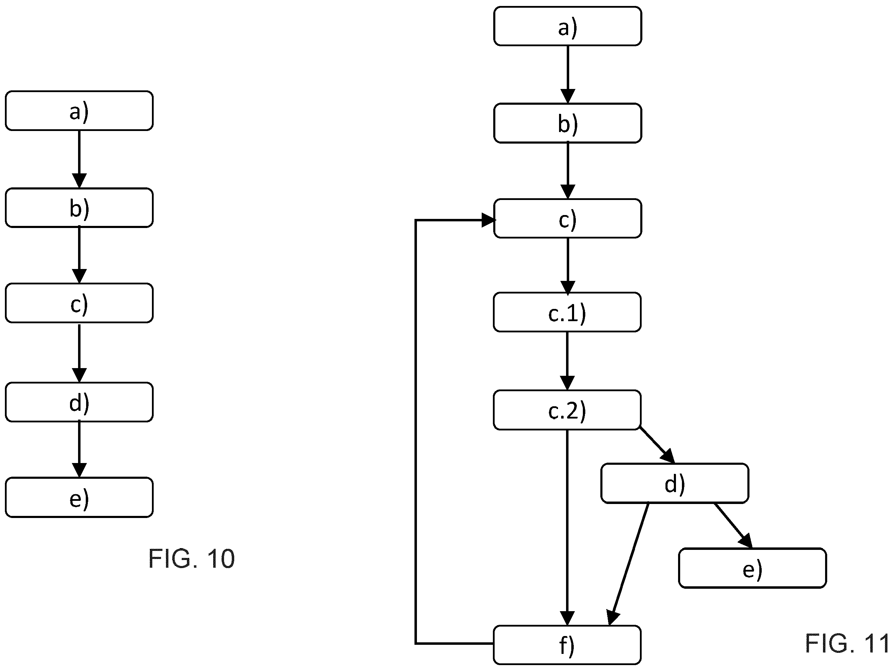

Figure 10 schematically illustrates an example of a flowchart comprising the following steps a) to e), which can be executed by the CAN device 200:
a) receiving an input message 210 via the input interface 206;
b) generating a TXD frame 212 by the CAN device 200 based on the input message 210 such that the TXD frame 212 represents the input message 210;
c) determining an bus idle state of a CAN bus network 104 by detecting a predetermined number of at least eleven consecutive recessive bits, referred to as termination bits 214, via the RXD interface 204;
d) determining an release state by detecting that no dominant bit is received over the RXD interface 204 within a predefined or predetermined waiting time 230 directly after the bus idle state; and
e) starting to send the TXD frame 212 via the TXD interface 202 at or after determining the release state.

For steps a) to d), reference is made to the preceding explanations, preferred features, technical effects and advantages in an analogous manner as explained for the CAN device 200 in the context of Figures 1-9.

Figure 11 schematically shows another example of a flow chart comprising the following steps a) to f), c.1) and c.2), which can be executed by the CAN device 200. For steps a) to e), reference is made to the previous explanations.

According to step c.1), the CAN device 200 may be configured to check whether a dominant signal, preferably representing a dominant bit, is received via the RXD interface 204 during the waiting time 230 and/or during the intermediate time 244.

According to step c. 2), the CAN device 200 may be configured to skip steps e) if in step c.1) a dominant signal is received via the RXD interface 204 during the intermediate time 244, or to skip steps d) and e) if in step c.1) a dominant signal is received via the RXD interface 204 during the waiting time 230. If in step c. 2) no dominant signal is detected by the CAN device 200 of the waiting time 230 or during the intermediate time 244, the CAN device 200 may be configured to perform steps d) and e) following step c.2). However, if it is determined by the CAN device 200 in step c.2) that step e) is to be skipped, the CAN device 200 may be configured to execute step f) following step d). Step f) will be explained further below. If it is determined by the CAN device 200 in step c.2) that steps d) and e) are to be skipped, the CAN device 200 may be configured to execute step f) following step c.2).

According to step f), the CAN device 200 may be configured to decrease the waiting time 230 and restart the previously explained sequence of steps from step c). The CAN device 200 arrives at step f) if it is not possible for the CAN device 200 to transmit the TXD frame 212. To improve the chance of sending the TXD frame 212, the waiting time 230 in step f) may be decreased for the next attempt. If the sending of the TXD frame 212 is not successful despite the reduced waiting time 230, the CAN device 200 again reaches step f) and the waiting time 230 is reduced again. This process starting with step c) can be repeated until the CAN device 200 successfully sends the TXD frame 212 in step e).

In an example, the CAN device 200 may be configured to repeat the group of steps c) through f), c.1), and c.2), wherein the CAN device 200 is configured to decrease the waiting time 230 in step f) depending on the respective number of times the group of steps is repeated and/or on a time since the TXD frame 212 first began transmitting.

The present disclosure may also comprise a method for the CAN device 200, wherein the method may comprise the steps of Figure 10 and/or of Figure 11.

Although the described exemplary embodiments disclosed herein focus on devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. A controller area network, CAN, device, comprising: an input interface, a processing unit, and a CAN controller, wherein the CAN controller comprising a transmit data, TXD, interface and a receive data, RXD, interface; wherein the CAN device is configured to
a) receive an input message via the input interface,
b) generate a TXD frame based on the input message such that the TXD frame represents the input message,
c) determine a bus idle state of a CAN Bus by detecting a predetermined number of at least eleven consecutive recessive bits, referred to as termination bits, received via the RXD interface,
d) determine a release state by detecting that no dominant bit is received via the RXD interface within a predefined or predetermined waiting time directly after the bus idle state; and
e) start sending the TXD frame via the TXD interface at or after the release state.

2. The CAN device according to the preceding claim, wherein the CAN device is configured to set a ready state as soon as the CAN device is ready to start transmitting the TXD frame via the TXD interface, wherein the CAN device is configured to start sending the TXD frame at the release state, if the ready state is at or before the release state.

3. The CAN device according to the preceding claim, wherein the CAN device is configured to prevent sending the TXD frame between the ready state and the release state.

4. The CAN device according to claim 2, wherein the CAN device is configured to start sending the TXD frame at the ready state, if both the release state is before the ready state and the CAN device detected that no dominant bit is received via the RXD interface within an intermediate time between the release state and the ready state.

5. The CAN device according to any of the preceding claims, wherein the waiting time is at least the duration of a fifth of a bit and/or at most the duration of 1000 bits.

6. The CAN device according to any of the preceding claims, wherein the processing unit is configured to determine the waiting time based on the input message.

7. The CAN device according to any of the preceding claims, wherein the input message comprises a field referred to as a priority field representing a priority of the input message, wherein the processing unit is configured to determine the waiting time based on the priority field of the input message.

8. The CAN device according to any of the preceding claims, wherein the input message is an Ethernet input message.

9. The CAN device according to any of the preceding claims, wherein the CAN device is configured to receive a RXD frame via the RXD interface and a plurality of interframe bits immediately after the RXD frame via the RXD interface, wherein the last bit(s) of the RXD frame and the interframe bits form the termination bits.

10. The CAN device according to any of the preceding claims, wherein the CAN device is configured to check whether a dominant signal is received via the RXD interface during the waiting time, and wherein the processing unit is configured to prevent sending of the TXD frame if a dominant signal is received via the RXD interface during the waiting time.

11. The CAN device according to the preceding claim, wherein CAN device is configured to perform the following steps after step c):
c.1) checking whether a dominant signal is received via the RXD interface during the waiting time and/or the intermediate time, and
c.2) skip steps d) and e) if a dominant signal is received via the RXD interface during the waiting time and/or the intermediate time.

12. The CAN device according to the preceding claim, wherein the CAN device is configured to decrease the waiting time as a further step f) and to repeat the group of steps c) to e), preferably also including step f).

13. The CAN device according to any of the preceding claims, wherein the CAN device is configured to repeat the group of steps c) to f), wherein the CAN device is configured to decrease the waiting time in step f) depending on the respective number of repetition of the group of steps and/or on a time since the TXD frame was first started to be sent.

14. A method for a Controller Area Network, CAN, device, comprising an input interface, a processing unit, and a CAN controller, the CAN controller comprising a transmit data, TXD, interface and a receive data, RXD, interface,
a) receiving an input message via the input interface,
b) generating a TXD frame at the CAN device based on the input message such that the TXD frame represents the input message,
c) determine a bus idle state of a CAN Bus by detecting a predetermined number of at least eleven consecutive recessive bits, referred to as termination bits, received via the RXD interface,
d) determine a release state by detecting that no dominant bit is received via the RXD interface within a predefined or predetermined waiting time directly after the idle state; and
e) start sending the TXD frame via the TXD interface at or after the release state.

15. The method of claim 14, wherein the method further comprising the following steps:
c.1) checking whether a dominant signal is received via the RXD interface during the waiting time and/or the intermediate time, and
c.2) skip steps d) and e) if a dominant signal is received via the RXD interface during the waiting time and/or the intermediate time.
